# EUROPEAN PATENT SPECIFICATION

(11) **EP 1 045 634 B1**
(45) Date of publication and mention of the grant of the patent: **06.08.2003**
(21) Application number: 99900724.8
(22) Date of filing: 07.01.1999
(51) Int. Cl.: A01K 61/00

(54) **SUBMERSIBLE FISH CAGE**
UNTERWASSEFISCHKÄFIG
PARC PISCICOLE SUBMERSIBLE

(30) Priority: 08.01.1998 NO 980086
(43) Date of publication of application: 25.10.2000
(73) Proprietor: Helgeland Plast A.S., 8601 Mo i Rana (NO)
(72) Inventor: LIEN, Egil, N-7078 Saupstad (NO); KOLBERG, Dag, N-8616 Basmoen (NO)
(74) Representative: Haley, Stephen
(86) International application number: NO9900006
(87) International publication number: WO99034668

(56) References cited:
- WO-A1-96/24245
- NO-B- 167 543

## Description

The invention relates to a fish cage which may be submerged to safeguard the cage and its contents of marine organisms against unwanted environmental agents as strong wave action, freezing, oil pollution and similar effects.

The applicants have since 1989 worked with development of submersible fish cages. The reason behind the wish to submerge fish cages to below the surface was the experience of losses of juveniles and adult fish due to local or regional algae flourishing. Such algae populations may be limited in extent to the upper part of the water masses. Further there may arise elevated sea temperature in the surface so that the oxygen content becomes so low that the fish in the cage becomes stressed or dies. During winter, the water surface freezing problem arises, or only icing of the part of the cage being situated above the sea surface. Large waves may also be a problem at exposed localities. By submerging the cage to a given depth these cages may be exposed for smaller forces than what they would have been exposed for at the sea surface. One solution for all these problems is to submerge the fish cage to a level lying so deeply that the conditions becomes better for the fish. Experiments on salmon show that they tolerate to go in the deep during prolonged periods, and that this does not incur biological disadvantages. It is important for the submersion and the elevation of the fish cage that this does not happen too fast, because the fish should have the possibility to compensate for the pressure change.

During the submersion problems may arise by incomplete evacuation of the fish cage's buoyancy device. An existing solution to this problem is to arrange several connection hoses for suctioning out / blowing out and injection of air. A development of such submersible cages has also taken place in Korea. A report from Fishing Technology Laboratory, National Fisheries Research & Development Agency, Pusan, 619-900, Korea: "Studies on the development of offshore facilities", dated July 1994, shows how a system of several connection hoses for air and several water valves makes it feasible to perform a relatively controlled submersion and elevation of the buoyancy ring of a fish cage. One embodiment shows an approximately circle-shaped fish cage with two air connectors being coupled in pair in a cross configuration. This makes possible to force in or extract air at a desired position and thus balance the buoyancy ring during submersion or elevation. A problem with this arrangement is that the outlet of water is situated directly below the air connectors, so one may blow out air directly through the water valve if this is open. Moreover, the buoyancy ring does not comprise any partition walls, so the device is not stable. Air injected will not stay in the section where it was injected, but will move freely upwards to the most elevated inside point of the buoyancy ring, and the device will thus be difficult to control during submersion and elevation.

The Norwegian Marine Technology Research Institute has, in a report published together with The Norwegian Research Council, called "Model Experiments with a Submersible Fish Cage", Bjoershol et Al., 1994, described how one may submerge a fish cage without having it to hang on entrapped air. The solution to the problems of entrapped air may be solved simply by attaching small floats under the connectors for air, so that all entrapped air will seek to these parts of the buoyancy ring during filling of water, and when the water is to be driven out.

NO 300 002 proposes to insert a partition wall arranged diametrally opposed to a water valve in the buoyancy ring. At either sides of the partition wall is arranged air hoses arranged both for injection of, and pumping out, air. Moreover, additional air hoses are proposed, arranged further away from the partition walls during submersion. This solution safeguards more stable submersion and elevation of the cage, but does not solve the problem of entrapped air preventing the intended submersion and unintended degree of filling and evacuation, of water or air. This is especially valid for large cage devices and at heavy water current or harsh sea conditions. The result is that one has to postpone the submersion process, start filling air, and evacuate the cage completely of water. Thereby the submersion process may be restarted. This is time consuming and may be decisive at short warning of environmental change, e.g. gale, oil spillage or poison producing organisms in the sea surface. Moreover the device demands manual operation during the entire submersion and elevation process, and in practical applications a crew of two. Moreover instruction and experience is demanded to operate the device rationally and to avoid unintentional locking of the device due to entrapped air.

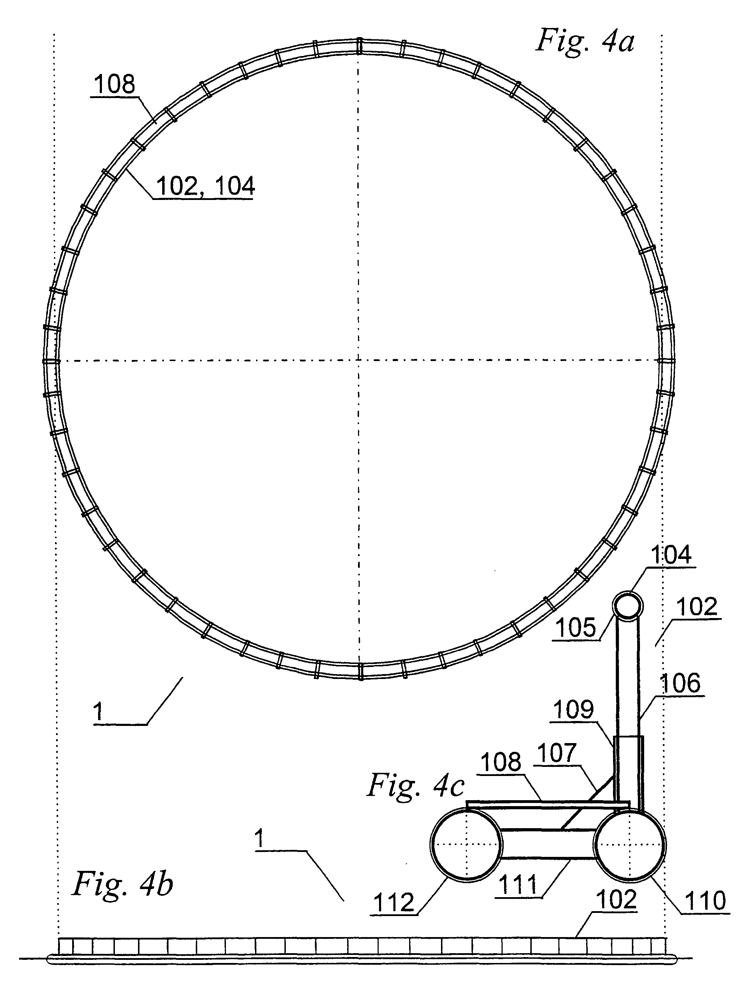

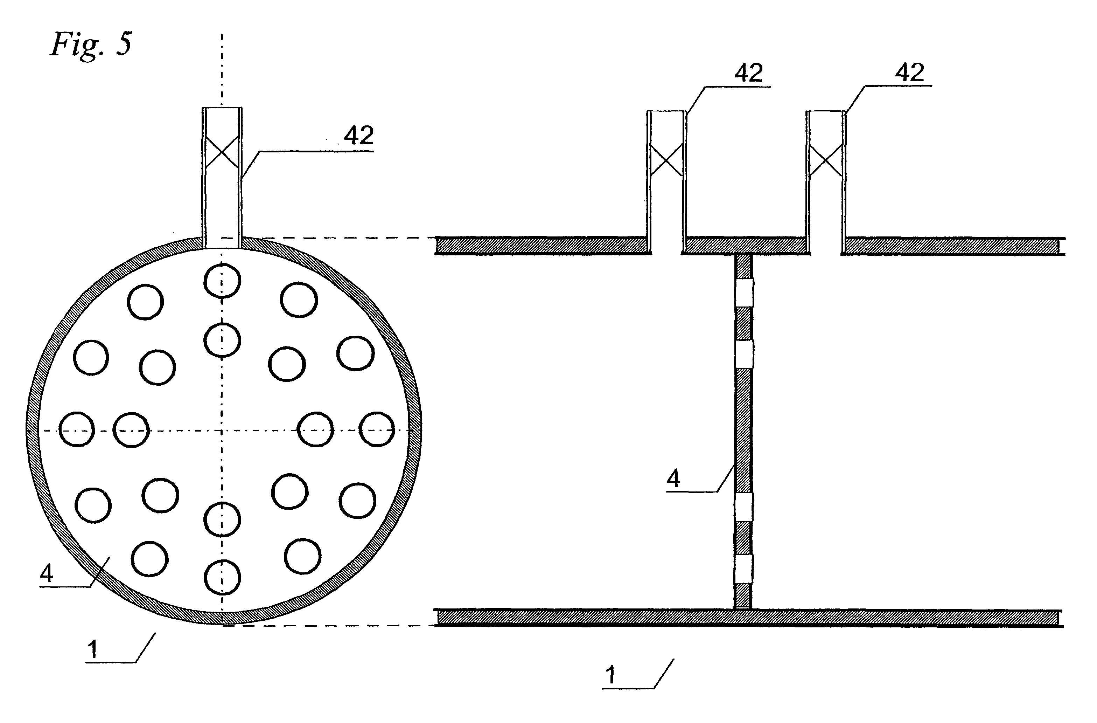

Norwegian patent publication NO 167 543, "Method and device to isolate the contents of a fish cage", describes among other items, a float system to bring an outer cage down and under a floating cage, by means of a buoyancy ring partitioned into chambers. It describes partition walls and connector valves for air and water, later described in NO 300 002, and it describes in its figure 4 and 5 how these partition walls partitions the buoyancy ring diametrally into for equal size parts. The disadvantages of that device arise during use when time falls short to submerge several fish cages simultaneously. The present invention may be submerged faster than the known art because the large sector A of the buoyancy ring may be opened for free influx of water and evacuation of air. Only the last part of the submergence operation should be performed controlled, and may also be made automatic so that the evacuation of the smaller sector B, which may constitute 1/3 to 1/4 of the buoyancy ring, takes place automatically when sector A is completely filled with water and evacuated essentially completely devoid of air. NO 167 543 displays a buoyancy ring which takes much longer to evacuate, as all of, and at least half of the ring must be evacuated in a controlled manner. This may be too slow in an emergency situation, e.g. upon receipt of a gale warning forecast and one has a deadline to meet on submerging an entire production plant consisting of several fish cages. It is also certain, that if a gale occurs without being forecasted, more of the production plant may be saved if it takes shorter time to submerge them in a controlled way.

The solution to the above mentioned problems arising in connection with the described art, consists of a device for elevating and submersing a fish cage, which may be furnished with one or more essentially concentric buoyancy rings being entirely or partially hollow, and closed towards the environment, and with valves for inlet and outlet of water, and injection and outlet of air or other gas, and with inside arranged tight partition walls or perforated baffle plates in the buoyancy rings. The new trait by the invention is first and foremost that two of the partition walls partition at least one of the buoyancy rings in a way so it consists of a larger horizontal sector and a smaller horizontal sector.

The invention comprises also a method for submersing a fish cage of the kind defined in claim 1, from lying in the surface position, with the special step of the method is that the valves of the larger sector A are opened so that water is let flowing freely in and air or other gas is let flowing freely out, so that sector A starts sinking, and thereby the valves of sector B are opened so that water may flow in and air or other gas controllably is let flow out or injected so that sector B sinks together with but more shallowly than sector A.

Additional traits by the invention may be found in the dependent claims.

Below a detailed specification of a preferred embodiment of the invention will be given, with reference to the furnished figure drawings:
- Fig. 1: shows a horizontal view illustrating the principle of partition of the buoyancy ring according to the invention.
- Fig. 2: is a horizontal view schematically illustrating a most possibly simple arrangement of a minimum number of valves on the buoyancy ring.
- Fig. 3a: shows the same horizontal view as Fig. 2, but with a baffle plate in the middle of sector B.
- Fig. 3b: is a side view of an embodiment of the invention. The fish cage is shown here as the water is flowing into sector A which is partially submerging, with the air flowing out of the air valves, while sector B floats with closed valves.
- Fig. 4a: is a horizontal view of an entire buoyancy ring of a fish cage.
- Fig. 4b: is a side view of the same buoyancy ring and shows in addition the hand railing.
- Fig. 4c: displays a vertical section of a section of the buoyancy ring with hand railing and stays between the buoyancy tubes.
- Fig. 5: is a cross-section and side-section of a buoyancy tube with corresponding air pipe and baffle plate.
- Fig. 6: is a corresponding cross-section of a buoyancy tube with air pipe or air valve.
- Fig. 7: shows a coupling diagram for air pressure pipes or hoses, and valves.
- Fig. 8: describes a cross-section and a longitudinal section of a buoyancy tube section with a partition wall.
- Fig. 9: is a longitudinal section of a buoyancy tube with water valve.

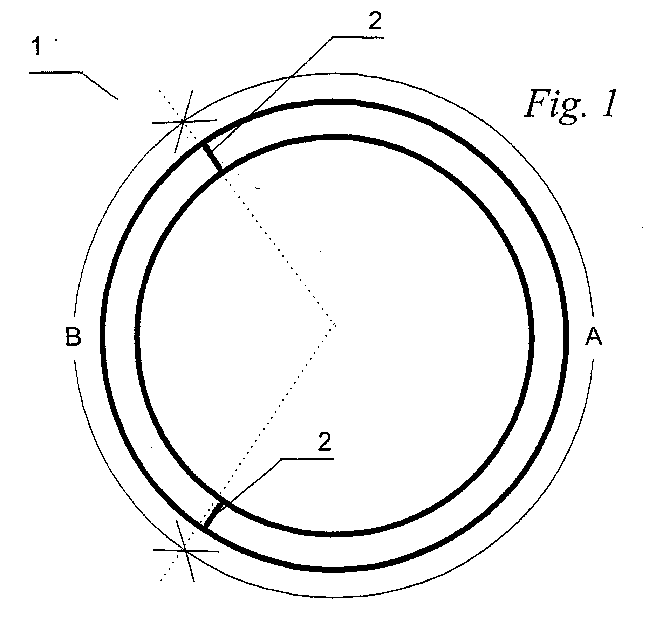

Fig. 1 shows in horizontal view a principal illustration of a buoyancy ring 1 being hollow inside and closed towards the environment. The buoyancy ring shall hold up a net or yarn (not shown) for keeping the fish inside the cage, the net keeping the fish inside the cage, and gangway, hand railing, feeding equipment and all other necessary accessories. The two tight partition walls 2 form two sectors of the fish cage, sector A being larger than the half circumference of the cage, and sector B being smaller than sector A.

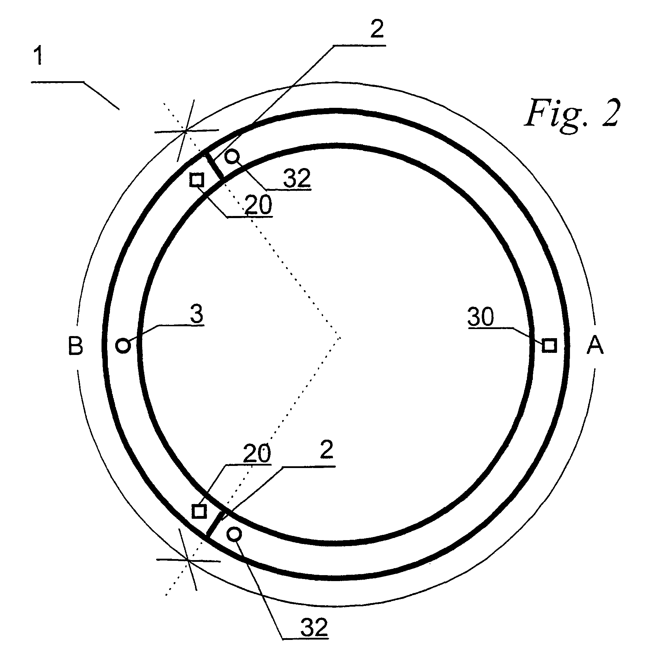

Fig. 2 shows air valves 3,32 for filling and outlet or pumping out air. Air valve 3 belongs to sector B, and the air valves 32 belong to sector A. A preferred embodiment has at least two air valves 32 on sector A, one close to each partition wall or shot 2. Sector B needs in the most simple embodiment only one air valve 3, but may have more air valves 3 if so is necessary with respect to stability and capacity. There exist large fish cages being actual for application of the invention, often with a circumference of 60 metres or much more. The buoyancy ring also has water valves 20 on sector B and 30 on sector A for inlet and outlet of water. In their most simple embodiment sector A has one water valve 30, and sector B should have at least two water valves 20, one arranged close to each tight partition wall 2. Of capacity considerations many more water valves 20 and 30 may be arranged than what is given heres as a minimum.

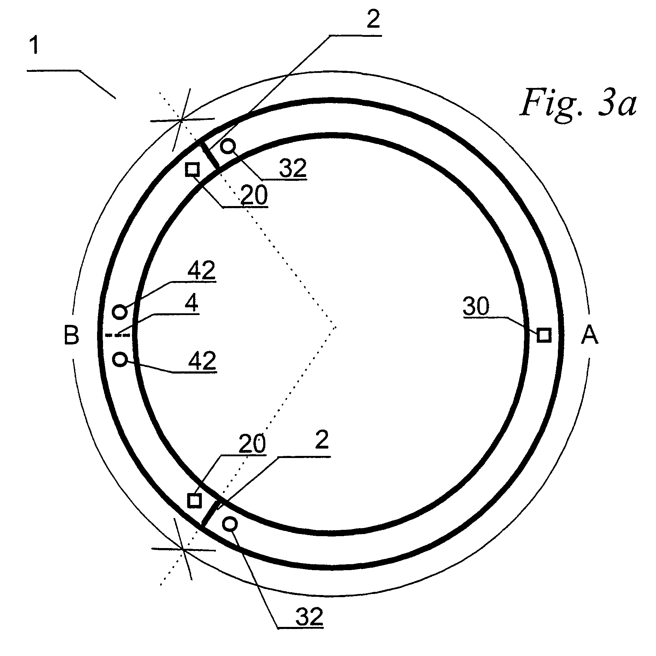

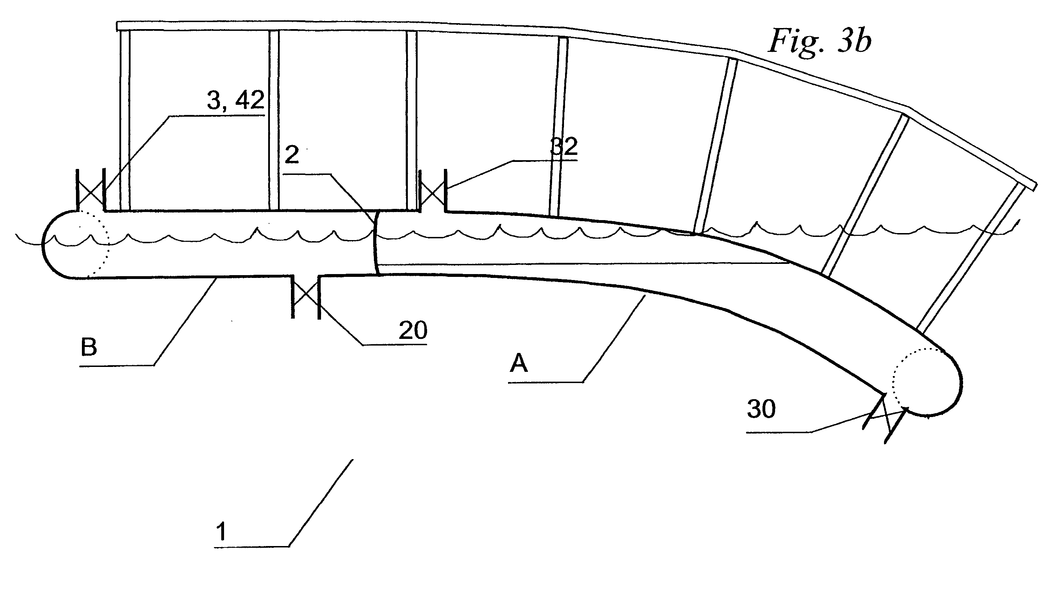

Fig. 3 shows in plane view an embodiment which for increased stability has set in a perforated shot or baffle plate 4. More than one baffle plate may be set in, depending on the size of the buoyancy ring and how heavy seas which can be expected for the locality where the cage shall be situated. The baffle plate is not closed, but may have openings or channels letting water through more slowly than without the baffle plate. The degree of retardation of the water flow depends on the number of openings or channels and their length and shape. The air valve is replaced by two air valves 42 arranged at either sides of the baffle plate 4. At least one of these must be present on the device in order to fill air to section B. Baffle plates contribute to preventing fast displacement of water inside the buoyancy ring which originally is very smooth. Baffle plates has thus the effect that the remaining water inside the buoyancy ring is prevented from collecting in one end of section B when the buoyancy ring is rolling from waves and heavy seas. Corresponding baffle plates may be arranged inside sector A (not shown in the Figures).

In the embodiments of the invention shown in Fig. 2, Fig. 3a will, during submersing as shown in Fig. 3b, first open a valve 30 in section A simultaneously with the opening of the valves 32 for release of air. This will do that the air is let evenly out of the air valves 32 which will be kept floating highest by section B. The water will flow in through the at least one water valve 30 which in a preferred embodiment is arranged at the middle of the circular arch between the two main partition walls 2. The cage will both hang in the surface and balance on section B during the submersion of section A. Thereby this part of the submersion process may be performed without further control of the equipment because section A will sink by itself and the two branches of part B will both keep the rest of the cage up and balance the submerging cage. Section B must be designed at least large enough to keep one part of the cage in surface position when section A is essentially entirely filled with water and evacuated for air. When section A has sunk sufficiently the water valves 20 and the air valves 3 or 42 are opened.

In a preferred embodiment of the invention the buoyancy device 1 of the fish cage consists of two concentric hollow rings, consisting of one outer and inner tube or pipe with preferably circular cross-section. The inner diameter of the preferred fish cage may vary between 22 and 44 metres. The outer diameter of the corresponding embodiment varies between 23 and 46 metres. It is, however, possible to produce the fish cage in alternative embodiments with much smaller or considerably larger diameter, or with polygonal main shape without this departing from the main idea of the invention which is independent of the physical dimensions of the embodiment. In an alternative embodiment the fish cage may comprise e.g. one single buoyancy ring or three concentric buoyancy rings.

Fig. 4b and 4c show a hand railing 102 keeping an up raging jump net (not shown) being sufficiently high so that fish may not escape by jumping out, and at the same time prevent foreign or unwanted fish from jumping in. The fish cage must have a covering net roof when being able to be submerged, otherwise the fish would flee. The net roof must have attached net roof floats (not shown) in the fish cage's surface centre. The net roof is preferably attached in the jump net, and should be of the same quality and mesh size as the rest of the net of the cage. Fig. 4c show details of the design of clamps and stays keeping each arch part of the buoyancy ring together. An entire fish cage may comprise 20 to 80 such stays and clamps keeping the two buoyancy rings in a fixed separation and at the same time holding the hand railing 102. The cross-section diameter of the tube comprising the outer and inner buoyancy ring are in a preferred embodiment between 20 and 31,5 cm. The separation between the outer and the inner buoyancy ring may in a preferred embodiment vary between 40 and 70 cm. The height of the hand railing may vary between 100 and 150 cm, or specified by the customer. The diameter of the handrail 104 of the hand railing 102 may be from 110 mm or larger, and is kept by clamps 105 of diameter approx. 125 mm attached on top of tubular posts or balusters 106 standing in pedestals 109 attached to the inner clamp ring 110 and an oblique stay 107 fixed to a horizontal lying stay 111 between outer clamp ring 112 and inner clamp ring 110. The clamps 110 clamp the inner buoyancy ring. The clamps 112 clamp the outer buoyancy ring. A gangway plate 108 is fixed according to the known art lying on the two buoyancy rings or carried by the clamps. The exact physical dimensions of the components here are insignificant for the idea of the invention, and may be arranged and applied differently within the scope of the invention.

Fig. 5 shows an embodiment of a baffle plate 4 and air valves 42. In a preferred embodiment the baffle plate 4 has a thickness of 15 mm and is arranged in close contact with the inner side of the buoyancy tube's inner side with a rim on both sides of the baffle plate. The baffle plate 4 is in a preferred embodiment perforated with a given number of holes with a given diameter, e.g. 20 holes, each with a diameter of 15 mm. The air valves 42 may have a diameter up to 40 mm. The baffle plate 4 may, in an alternative embodiment, be closed.

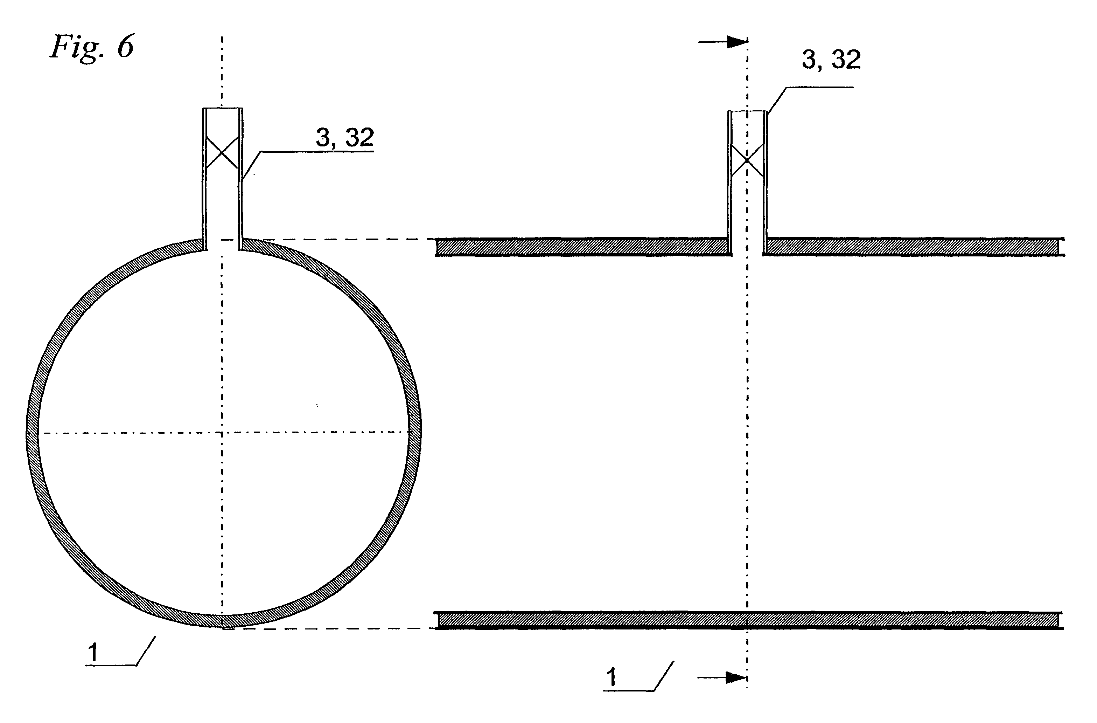

Fig. 6 displays an embodiment of the air valves 3, 32. These have a diameter of up to 40 mm.

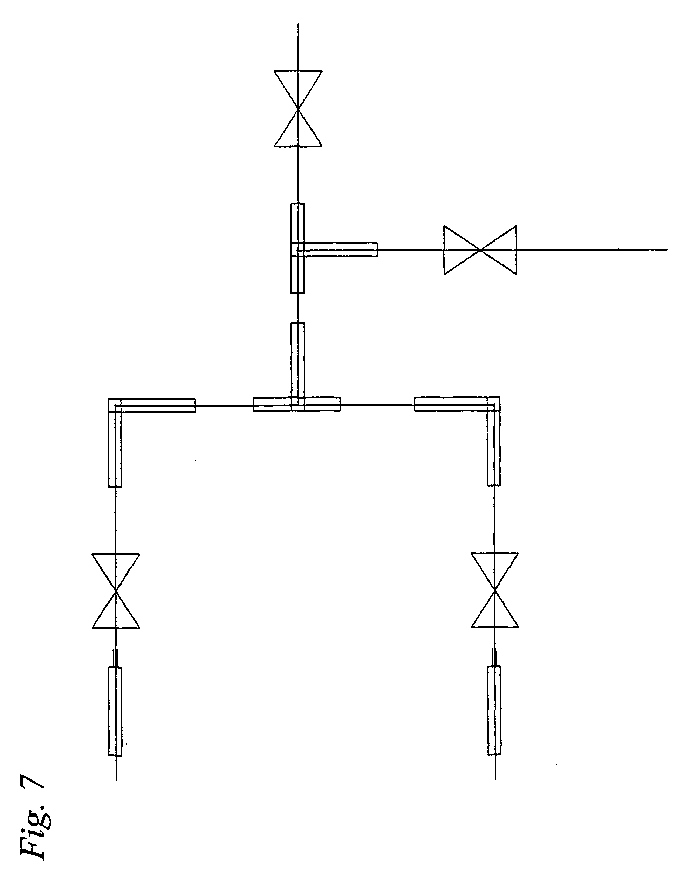

Fig. 7 shows a principle illustration for the air valves of outlets and injection of air or other gas. The air supply may happen by means of compressed air from a compressor or from an air accumulator. The regulation of the supply pressure happens via a separate pressure regulator (not shown) which must be set according to maximum allowed submergence depth. The speed of submersion and elevation depends on the dimension of hoses and in lesser degree also of the dimension of valves, duration of opening and closing intervals, and also upon the flow ratio of the pressure regulator. The fish cage will, with a buoyancy tube diameter of 315 mm have a volume of 78 litres / running metre. With two concentric buoyancy tubes and a circumference of 90 metres of the fish cage, the volume of the buoyancy rings is about 14000 litres. A typical compressor supplies an amount of air of 15 l/min at 6 bar. By a submersed depth of 10 m, i.e. 1 Bar, and sector B covering 1/4 of the circumference of the ring, one would need to fill 14400 litres /4 = 3600 litres of air into the buoyancy ring under controlled conditions during the elevation, contrary to the existing fish cages where there normally is a demand to fill the entire cage simultaneously of safeguarding to balance the cage.

Given a pump with a supply capacity of V₀ = 15 l/minute at p₀ = 6 bar, and constant temperature, it will take about 12 minutes to fill 3600 litres of air, or 1/4 of the entire ring and thus bring the entire cage up in balanced surface position from a depth of 3 metres, and ready for connection of sector A and continued injection. On the contrary, cages designed according to the known art would take the double amount of time to bring the cage in balanced condition in surface position. With the fish cage according to the invention is brought in surface position with sector B, further injection into sector A may happen automatically and without supervision after the air supply is connected to sector A.

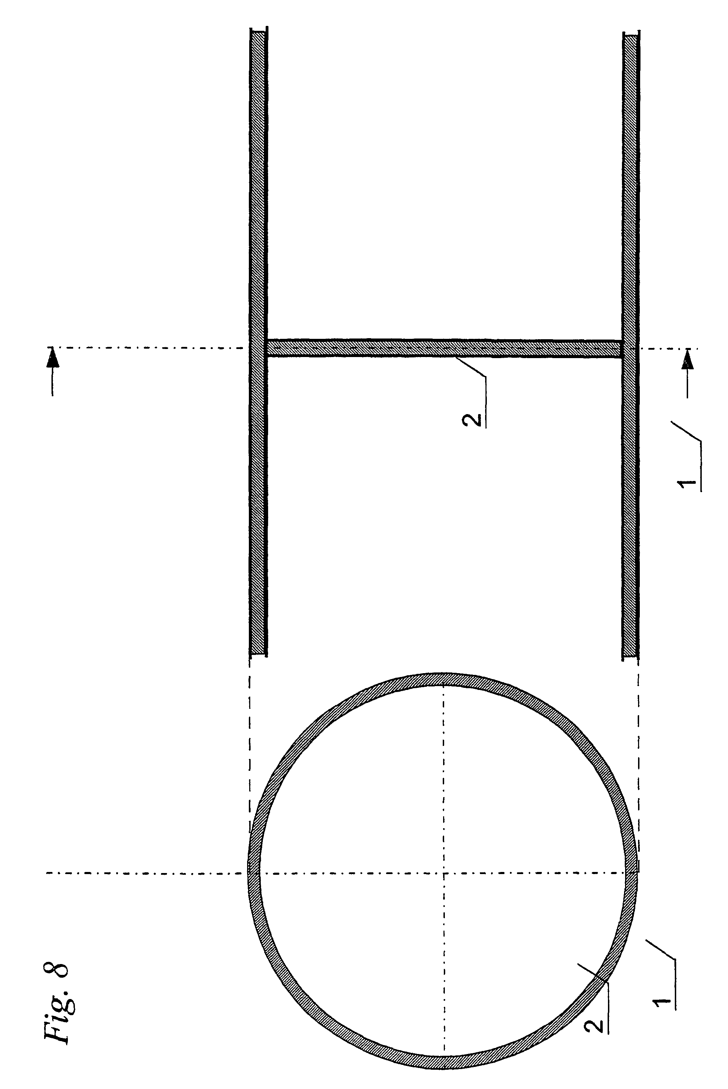

The partition wall 2 in itself is shown in section in Fig. 8. The partition wall is preferably of 15 mm thickness and arranged tightly closing to the buoyancy ring's inner side with a rim at either sides of the partition ring or shot. It separates between sectors A and B.

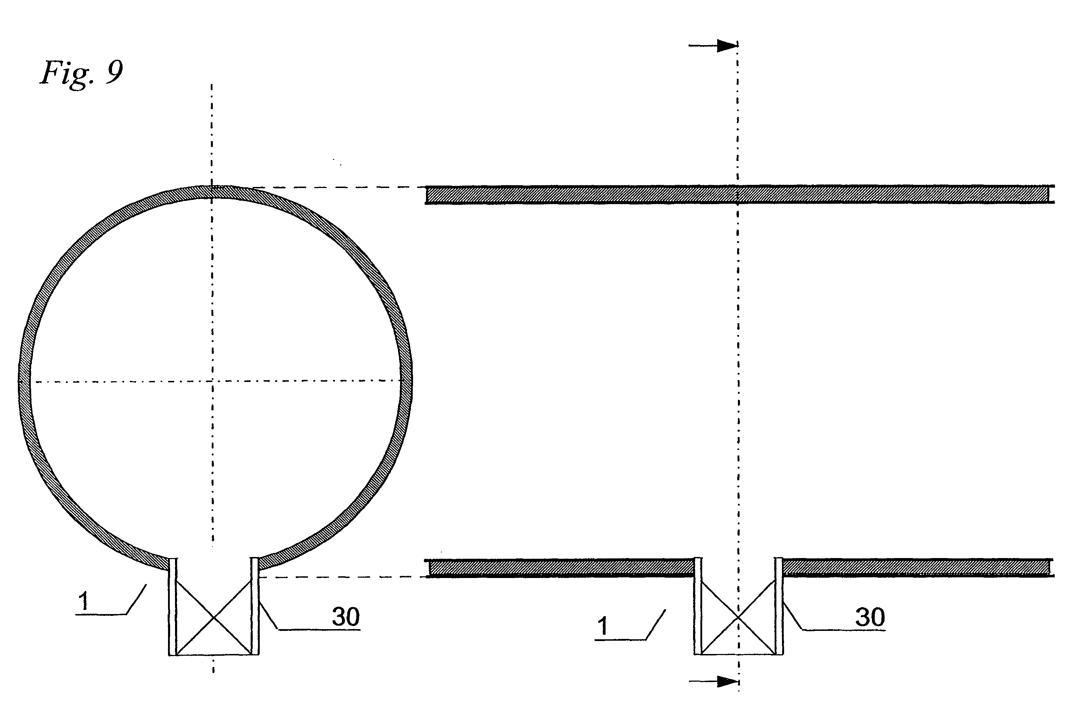

Fig. 9 displays a section of the buoyancy tube 1 at a water valve 20, 30. The water valve 20,30 may in the preferred embodiment have a diameter up to 110 mm, either with or without a closing mechanism.

The air supply to sector B may be done by means of pressure air pipes from a compressor or an air accumulator at the surface. Alternatively one may arrange an air accumulator on the cage so that it is remotely controlled to fill sector B when one wishes to bring the cage to the surface. The triggering of this pressure air accumulator, either via a line, a bob, acoustic trigger, magnetic or similar, is a task for the skilled person.

The pressure air lines' connector points to the air valves 3, 32, 42 are in a preferred embodiment extended to the handrail 102, both due to the work posture and that they shall arrive the earliest possible above the waterline during the elevation process. This is also an advantage to avoid the net hanging in details standing out.

While sector B is brought to the surface and the buoyancy ring's chambers ar sufficiently evacuated of water, the elevation process is completed. The pressure air hoses are disconnected and the air valves 3, 42, 32 are closed.

It is an important fact that sector B is sufficiently large so that it is able to keep the cage partially floating in the surface even though all of sector A is filled with water and entirely evacuated of air. This is also a condition for the cage to be elevated partially to the surface by means of sector B only.

The figures show outreaching end piece sleeves for the air valves and the water valves. In an alternative embodiment the floating ring may be provided with inward turned end piece sleeves with air valves and water valves to avoid lines and nets to be hung up in the buoyancy ring.

## Claims

1. A fish cage having one or more essentially concentric, entirely or partially hollow buoyancy rings being closed towards the environment, and with valves for inlet and outlet of water and injection or outlet of air or other gas, and with tight partition walls or perforated baffle plates inside the buoyancy rings,
**characterized by**
two partition walls only, dividing at least one of the buoyancy rings in an asymmetrical way, the buoyancy ring consisting of one larger continuous, internally open, horizontal sector (A) and one smaller horizontal sector (B), together constituting essentially the circumference of the fish cage.

2. Device according to claim 1,
**characterized by**
at least one air valve, preferably two, at the smaller sector (B) arranged essentially close to the centre line between the main partition walls.

3. Device according to claim 1,
**characterized by**
at least one air valve in the larger sector (A) arranged near each main partition wall between the larger sector (A) and the smaller sector (B).

4. Device according to claim 1,
**characterized by**
a water valve in the larger sector (A), arranged essentially at the centre line between the main partition walls between the larger sector (A) and the smaller sector (B).

5. Device according to claim 1,
**characterized by**
at least two water valves in the smaller sector (B), with one water valve arranged near each main partition wall.

6. Device according to one of the above mentioned claims,
**characterized by**
a water flow restraining baffle plate or a tight partition wall dividing the smaller sector (B) arranged essentially at the centre line between the main partition walls.

7. Device according to one of the above mentioned claims,
**characterized by**
one or more baffle plates in the larger sector (A).

8. Device according to claim 2,
**characterized by**
a submersible pressure air accumulator arranged on the smaller sector (B), arranged for injection of air or other gas in the air valve of the smaller sector (B), and arranged for remotely controlled opening or closing from the sea surface.

9. Device according to one of the above mentioned claims,
**characterized by**
a sensor device on the larger sector (A) arranged for measuring depth, pressure, angle, or other parameter indicating the degree of submergence or filling of the cage,
with the sensor device being coupled to a controlling device arranged to at least opening the air valves and the water valves of the smaller sector (B) on passing a certain degree of submergence or tilting sensed by the sensor device.

10. Method for submersing a fish cage of the type defined in claim 1, from its surface position,
**characterized in** the following steps:
that the valves in the larger sector (A) are opened so that water may flow freely in, and air or other gas is let flowing freely out, so that the larger sector (A) starts submerging;
thereafter the valves of the smaller sector (B) are opened so that water may flow in, and air or other gas controllably may flow out or being injected so that the smaller sector (B) is submerged together with, but being more shallowly submerged than the larger sector (A).

11. Method according to claim 10
**characterized in**
**that** the submersion of the smaller sector (B) is started in that a sensor device of the larger sector (A) controls the valves of the smaller sector (B) to open when the larger sector (A) is sufficiently filled with water or has sunk to a sufficient depth.

12. Method for elevating a fish cage of the type defined in claim 1, from a submerged position
**characterized in** the following steps:
the valves of the smaller sector (B) are opened so that air or other gas is injected into the smaller sector (B) in a controlled way, and that water flows out of the smaller sector (B) so that the smaller sector (B) is filled with air and evacuated of water, and that the smaller sector is brought to float in the surface of the sea, and thus keeping the cage in partially floating and balanced position, and
thereafter the valves of the larger sector (A) are opened so that air or other gas is injected into the larger sector (A) in a controlled way and that water flows out of the larger sector (A) so that the larger sector (A) is filled with air or other gas and evacuated of water and brought to float in the surface of the sea.

## Revendications

1. Cage à poissons comprenant un ou plusieurs anneaux de flottabilité, essentiellement concentriques, entièrement ou partiellement creux, fermés par rapport au milieu ambiant, et équipés de vannes pour l'entrée et la sortie de l'eau et pour l'injection ou l'échappement d'air ou d'autres gaz, et de parois de séparation étanches ou de plaques écrans perforées, à l'intérieur des anneaux de flottabilité
**caractérisée par**
seulement deux parois de séparation, divisant au moins l'un des anneaux de flottabilité d'une manière asymétrique, l'anneau de flottabilité consistant en un secteur horizontal (A) plus grand, ouvert intérieurement, continu, et en un secteur horizontal (B) plus petit, formant ensemble essentiellement la circonférence de la cage à poissons.

2. Dispositif selon la revendication 1, **caractérisé par**
au moins une vanne pour l'air, préférablement deux, implantées sur le secteur (B) plus petit, essentiellement à proximité de l'axe médian médian entre les parois de séparation principales.

3. Dispositif selon la revendication 1, **caractérisé par**
au moins une vanne pour l'air dans le secteur (A) plus grand, implantée près de chaque paroi principale de séparation entre le secteur (A) plus grand et le secteur (B) plus petit.

4. Dispositif selon la revendication 1, **caractérisé par**
une vanne pour l'eau dans le secteur (A) plus grand, implantée essentiellement sur l'axe médian entre les parois de séparation principales entre le secteur (A) plus grand et le secteur (B) plus petit.

5. Dispositif selon la revendication 1, **caractérisé par**
au moins deux vannes pour l'eau dans le secteur (B) plus petit, avec une vanne pour l'eau implantée près de chaque paroi principale de séparation.

6. Dispositif selon l'une des revendications précédentes, **caractérisé par**
une plaque écran de limitation du débit de l'eau, ou une paroi de séparation étanche divisant le secteur (B) plus petit, implantée essentiellement sur l'axe médian entre les deux parois de séparation principales.

7. Dispositif selon l'une des revendications précédentes, **caractérisé par**
une ou plusieurs plaques écrans dans le secteur (A) plus grand

8. Dispositif selon la revendication 2, **caractérisé par**
un accumulateur de pression d'air submersible, implanté sur le secteur (B) plus petit, prévu pour l'injection d'air ou d'un autre gaz par la vanne pour l'air du secteur (B) plus petit, et prévu pour être ouvert ou fermé par commande à distance depuis la surface de la mer.

9. Dispositif selon l'une des revendications précédentes, **caractérisé par**
un dispositif de détection sur le secteur (A) plus grand, prévu pour mesurer la profondeur, la pression, l'angle ou un autre paramètre indiquant le degré d'immersion ou de remplissage de la cage,
le dispositif de détection étant connecté à un dispositif de commande prévu pour ouvrir au moins les vannes pour l'air et les vannes pour l'eau du secteur (B) plus petit lorsque le dispositif de détection détecte un certain degré d'immersion ou d'inclinaison.

10. Méthode pour immerger une cage à poissons du type défini dans la revendication 1, au départ de sa position en surface, **caractérisée par** les étapes suivantes:
les vannes dans le secteur (A) plus grand sont ouvertes pour que l'eau puisse entrer librement, et que l'air ou autre gaz puisse s'échapper librement, de sorte que le secteur (A) plus grand commence à s'immerger;
ensuite les vannes du secteur (B) plus petit sont ouvertes pour que l'eau puisse entrer, et que l'air ou autre gaz puisse s'échapper de manière contrôlée, ou être injecté de sorte que le secteur (B) plus petit soit immergé simultanément avec le secteur (A) plus grand, mais soit immergé à une moindre profondeur.

11. Méthode selon la revendication 10, **caractérisée en ce que** l'immersion du secteur (B) plus petit commence quand le secteur (A) plus grand est suffisamment rempli d'eau, ou s'est immergé à une profondeur suffisante, et **en ce que** le dispositif de détection du secteur (A) plus grand commande l'ouverture des vannes du secteur (B) plus petit.

12. Méthode pour remonter une cage à poissons du type défini dans la revendication 1, depuis une position immergée, **caractérisée par** les étapes suivantes:
les vannes du secteur (B) plus petit sont ouvertes pour que de l'air ou un autre gaz soit injecté de manière contrôlée dans le secteur (B) plus petit, et que l'eau s'écoule hors du secteur (B) plus petit afin que le secteur (B) plus petit soit rempli d'air et vidé de son eau, et que le secteur plus petit soit amené à flotter à la surface de la mer, et donc garde la cage dans une position de flottaison partielle et d'équilibre, et
ensuite les vannes du secteur (A) plus grand sont ouvertes pour que de l'air ou un autre gaz soit injecté de manière contrôlée dans le secteur (A) plus grand, et que l'eau s'écoule hors du secteur (A) plus grand de sorte que le secteur (A) plus grand soit rempli d'air ou d'un autre gaz, vidé de l'eau, et amené à flotter à la surface de la mer.

## Patentansprüche

1. Fischkäfig, der einen oder mehrere im wesentlichen konzentrische, vollständig oder teilweise hohle Auftriebsringe hat, die in Richtung der Umgebung geschlossen sind und mit Ventilen versehen sind zum Einlaß und Auslaß von Wasser und Einführen oder Ablassen von Luft oder anderem Gas und mit dichten Trennwänden oder perforierten Prallplatten im Inneren der Auftriebsringe, **gekennzeichnet durch** lediglich zwei Trennwände, welche auf asymmetrische Weise wenigstens einen der Auftriebsringe unterteilen, wobei der Auftriebsring aus einem größeren, durchgehenden, innen offenen, horizontalen Abschnitt (A) und einem kleineren, horizontalen Abschnitt (B) besteht, die zusammen im wesentlichen den Umfang des Fischkäfigs bilden.

2. Vorrichtung nach Anspruch 1, **gekennzeichnet durch** wenigstens ein Luftventil, vorzugsweise zwei am kleineren Abschnitt (B), das/die im wesentlichen nahe der Mitte zwischen den Haupttrennwänden angeordnet ist/sind.

3. Vorrichtung nach Anspruch 1, **gekennzeichnet durch** wenigstens ein Luftventil in dem größeren Abschnitt (A), das nahe jeder Haupttrennwand zwischen dem größeren Abschnitt (A) und dem kleineren Abschnitt (B) angeordnet ist.

4. Vorrichtung nach Anspruch 1, **gekennzeichnet durch** ein Wasserventil in dem größeren Abschnitt (A), das im wesentlichen bei der Mitte zwischen den Trennwänden zwischen dem größeren Abschnitt (A) und dem kleineren Abschnitt (B) angeordnet ist.

5. Vorrichtung nach Anspruch 1, **gekennzeichnet durch** wenigstens zwei Wasserventile in dem kleineren Abschnitt (B), wobei ein Wasserventil nahe jeder Haupttrennwand angeordnet ist.

6. Vorrichtung nach einem der oben erwähnten Ansprüche, **gekennzeichnet durch** eine eine Wasserströmung hemmende Prallplatte oder eine dichtende Trennwand, die den kleineren Abschnitt (B) unterteilt und im wesentlichen bei der Mitte zwischen den Trennwänden angeordnet ist.

7. Vorrichtung nach einem der zuvor erwähnten Ansprüche, **gekennzeichnet durch** eine oder mehrere Prallplatten in dem größeren Abschnitt (A).

8. Vorrichtung nach Anspruch 2, **gekennzeichnet durch** einen Eintauchdruck-Luftspeicher, der an dem kleineren Abschnitt (B) angeordnet ist und zum Zuführen von Luft oder anderem Gas in das Luftventil des kleineren Abschnitts (B) dient und angeordnet ist zum ferngesteuerten Öffnen oder Schließen von der Meeresoberfläche aus.

9. Vorrichtung nach einem der oben erwähnten Ansprüche, **gekennzeichnet durch** eine Sensorvorrichtung an dem größeren Abschnitt (A) zum Messen der Tiefe, des Drucks, Winkels oder anderen Parameters, welcher den Grad des Eintauchens oder Füllens des Käfigs angibt, wobei die Sensorvorrichtung mit einer Steuervorrichtung gekoppelt ist, die vorgesehen ist, um zumindest die Luftventile und die Wasserventile des kleineren Abschnitts (B) zu öffnen beim Vonstattengehen eines gewissen Grades eines Eintauchens oder Neigens, das von der Sensorvorrichtung erfaßt wird.

10. Verfahren zum Eintauchen eines Fischkäfigs des in Anspruch 1 definierten Typs aus seiner Oberflächenposition heraus, **gekennzeichnet durch** die folgenden Schritte:
daß die Ventile in dem größeren Abschnitt (A) geöffnet werden, so daß Wasser frei hereinströmen kann und Luft oder anderes Gas frei ausströmen kann, so daß der größere Abschnitt (A) damit beginnt, einzutauchen;
daß danach die Ventile des kleineren Abschnitts (B) geöffnet werden, so daß Wasser einströmen kann und Luft oder anderes Gas steuerbar ausströmen kann oder eingeführt wird, so daß der kleinere Abschnitt (B) damit zusammen untergetaucht wird, jedoch weniger tief eingetaucht ist als der größere Abschnitt (A).

11. Verfahren nach Anspruch 10, **dadurch gekennzeichnet, daß** mit dem Eintauchen des kleineren Abschnitts (B) insofern begonnen wird, als eine Sensorvorrichtung des größeren Abschnitts (A) die Ventile des kleineren Abschnitts (B) steuert, um sie zu öffnen, wenn der größere Abschnitt (A) ausreichend mit Wasser gefüllt oder in eine ausreichende Tiefe abgesunken ist.

12. Verfahren zum Anheben eines Fischkäfigs des in Anspruch 1 definierten Typs aus einer eingetauchten Position, **gekennzeichnet durch** die folgenden Schritte:
die Ventile des kleineren Abschnitts (B) werden geöffnet, so daß Luft oder anderes Gas in gesteuerter Weise in den kleineren Abschnitt (B) eingeführt wird und Wasser aus dem kleineren Abschnitt (B) herausströmt, so daß der kleinere Abschnitt (B) mit Luft gefüllt und von Wasser entleert wird und der kleinere Abschnitt zum Schwimmen auf der Oberfläche des Meeres gebracht wird und **dadurch** der Käfig in teilweise schwebender und ausgewogener Position gehalten wird, und
danach die Ventile des größeren Abschnitts (A) geöffnet werden, so daß Luft oder anderes Gas auf gesteuerte Weise in den größeren Abschnitt (A) eingeführt wird und daß Wasser aus dem größeren Abschnitt (A) herausströmt, so daß der größere Abschnitt (A) mit Luft oder anderem Gas gefüllt und von Wasser entleert ist und zum Schwimmen in der Oberfläche des Meeres gebracht wird.
